# EUROPÄISCHE PATENTSCHRIFT

(11) **EP 0 780 396 B1**
(45) Veröffentlichungstag und Bekanntmachung des Hinweises auf die Patenterteilung: **02.10.2002**
(21) Anmeldenummer: 96120155.5
(22) Anmeldetag: 16.12.1996
(51) Int. Cl.: C07F 17/00

(54) **Verfahren zur Abreicherung von Nebenprodukten in Produktgemischen**
Process for depleting by-products in reaction mixtures
Procédé pour diminuer la quantité de produits secondaires dans des mélanges

(30) Priorität: 18.12.1995 DE 19547248; 18.12.1995 DE 19547247
(43) Veröffentlichungstag der Anmeldung: 25.06.1997
(73) Patentinhaber: Basell Polyolefine GmbH, 67056 Ludwigshafen (DE)
(72) Erfinder: Kaufmann, Wilhelm, Dipl.-Ing., 63322 Rödermark (DE); Wisser, Thomas, Dr., 65552 Limburg (DE); Streb, Johann, 65931 Frankfurt (DE); Rink, Thomas, 65936 Frankfurt (DE); Zenk, Roland, Dr., 65812 Bad Soden (DE); Riedel, Michael, Dr., 45130 Essen (DE); Cabrera, Ivan, Dr., 63303 Dreieich (DE)

(56) Entgegenhaltungen:
- EP-A- 0 574 597
- EP-A- 0 576 970
- EP-A- 0 669 340
- US-A- 5 302 733
- J. ORGANOMET. CHEM. (JORCAI,0022328X);89; VOL.369 (3); PP.359-70, UNIV. KONSTANZ;FAK. CHEM.; KONSTANZ; D-7750; FED. REP. GER. (DE), XP002028148 WIESENFELDT H ET AL: "ansa-Metallocene derivatives. XVII. Racemic and meso diastereomers of Group IV metallocene derivatives with symmetrically substituted, dimethylsilanediyl-bridged ligand frameworks. Crystal structure of R,S-Me2Si(3-tert-Bu-5-MeC5H2)2ZrCl2"
- CHEMICAL ABSTRACTS, vol. 123, no. 16, 16.Oktober 1995 Columbus, Ohio, US; abstract no. 199695, INOE N ET AL: "Purification of metallocene olefin polymerization catalysts" XP002028149 & JP 07 097 388 A (MITSUI TOATSU CHEMICALS;JAPAN) 11.April 1995

## Beschreibung

Die vorliegende Erfindung bezieht sich auf ein Verfahren zur Abreicherung von organometallischen und/oder anorganischen Nebenprodukten in Produktgemischen, die bei der Synthese von Metallocenen anfallen, insbesondere zur Abtrennung isomerer Metallocene und/oder Metallhalogenide, die bei der Metallocensynthese anfallen.

Metallocene können, gegebenenfalls in Kombination mit einem oder mehreren Cokatalysatoren, als Katalysatoren für die Polymerisation und Copolymerisation von Olefinen verwendet werden. Insbesondere werden als Katalysatorvorstufen halogenhaltige Metallocenkomplexe eingesetzt, die sich beispielsweise durch ein Aluminoxan in einen polymerisationsaktiven kationischen Metallocenkomplex überführen lassen (EP-A-129368).

Die Synthese von Metallocenen ist bekannt (US 4752597; US 5017714; US 5103030; EP-A-336128; EP-A-387690; EP-A-530647; EP-A-537686; EP-A-549900; H.-H. Brintzinger, D. Fischer, R. Mülhaupt, B. Rieger und R. Waymouth, Angew. Chem., 107 (1995) 1255; Angew. Chem. Int. Ed. Engl., 34 (1995) 1143; M. Aulbach und F. Küber, ChiuZ, 28 (1994) 197). Dazu können Metallverbindungen, z.B. Metallalkoxide oder Metallhalogenide wie TiCl₄, ZrCl₄, HfCl₄, mit unterschiedlichsten Cyclopentadienyl-Metall-Verbindungen umgesetzt werden. Dabei entstehen erhebliche Mengen an anorganischen Nebenprodukten (z.B. Salzen), die mit dem Metallocen vermischt sind. Bei der Verwendung von Metallocenen als Katalysatoren für die Olefinpolymerisation beeinträchtigen diese anorganischen Nebenprodukte die Katalysatoraktivität. Zur Trägerung von Metallocenkatalysatoren, werden die Metallocene in der Regel mit einem Cokatalysator aktiviert und als Lösung in einem unpolaren Lösungsmittel auf einen festen Träger aufgebracht. Auch hierbei ist ein niedriger Gehalt an anorganischen Nebenprodukten im verwendeten Metallocen vorteilhaft.

Die Trennung von Metallocen und anorganischen Nebenprodukten wird üblicherweise durch Lösen des Metallocens mit organischen Lösungsmitteln durchgeführt, wobei die anorganischen Nebenprodukte als schwerlösliche Komponente abgetrennt werden können. Besonders häufig werden hierfür als Lösungsmittel Toluol und Dichlormethan oder auch andere Lösungsmittel wie Tetrahydrofuran, Diethylether, aliphatische, aromatische und chlorierte Kohlenwasserstoffe verwendet. Nachteile dieser Methode bestehen darin, daß viele Metallocene in den gebräuchlichen organischen Lösungsmitteln nur mäßig löslich sind und daher große Lösungsmittelmengen, große Filterapparate und ein hoher Zeitaufwand benötigt werden. Außerdem werden oftmals große Mengen toxischer oder umweltrelevanter Lösungsmittel eingesetzt. Da die anorganischen Nebenprodukte oft in sehr feiner Verteilung anfallen, können Filtrationszeiten sehr lang werden, selbst wenn man Filterhilfsstoffe zusetzt und bei erhöhtem Druck filtriert. Um das Metallocen möglichst vollständig aus dem Filtrat isolieren zu können, muß das Lösungsmittel in der Regel abdestilliert werden. Dabei stellt sich das Problem der begrenzten Stabilität solcher Metallocenlösungen gegenüber Verunreinigungen wie Feuchtigkeitsspuren, Basen, protischen Verbindungen sowie thermischer Belastung.

Weiterhin können bei der Synthese von Metallocenen erhebliche Mengen organometallischer Nebenprodukte (z.B. Isomere) entstehen, die mit dem gewünschten Metallocen vermengt sind und dessen katalytische Eigenschaften beeinträchtigen können. Beispielsweise entstehen die für die Olefinpolymerisation besonders attraktiven verbrückten Bisindenyl-Metallocene in der Regel als Gemisch von racemischen und meso-Formen. Oft ist jedoch nur eine dieser isomeren Verbindungen für die stereoselektive Polymerisation von Olefinen geeignet (z.B. das Racemat); das andere Isomer (im Falle der verbrückten Bis-indenylmetallocene ist das zumeist die meso-Form) hat häufig eine geringere Stereoselektivität und wird abgetrennt.

Die Isolierung eines gewünschten Metallocens kann durch vollständiges Lösen des bei der Synthese anfallenden Rohproduktes mit einem geeigneten Lösungsmittel erfolgen (H.G. Alt et al., J. Organomet. Chem., 472 (1994) S.113), wobei durch anschließende fraktionierte Kristallisation oder fraktionierte Fä!lung eine Abreicherung unerwünschter organometallischer Nebenprodukte (z.B. Isomere) erfolgt. Da viele Metallocene in den gebräuchlichen Lösungsmitteln nur mäßig löslich sind, erfordert das vollständige Lösen des Rohproduktes große Lösungsmittelmengen, große Filterapparate und einen hohen Zeitaufwand. Diese Vorgehensweise ist mit teilweise erheblichen Ausbeuteverlusten verbunden, wenn man höhere Reinheiten bestimmter Metallocene anstrebt. Für das vollständige Lösen werden zudem oftmals große Mengen toxischer oder umweltrelevanter Lösungsmittel eingesetzt. Außerdem sind viele Metallocene in gelöster Form empfindlich gegenüber Verunreinigungen wie Feuchtigkeitsspuren, Basen, protischen Verbindungen sowie thermischer Belastung.

Es bestand also die Aufgabe ein einfaches, schonendes und wirkungsvolles Verfahren zur Abreicherung von organometallischen und/oder anorganischen Nebenprodukten, die bei der Metallocensynthese anfallen, zur Verfügung zu stellen.

Die vorliegende Erfindung betrifft somit ein Verfahren zur Abreicherung von organometallischen und/oder anorganischen Nebenprodukten in Produktgemischen, die bei der Metallocensynthese anfallen, wobei eine Mischung, enthaltend eines oder mehrere Metallocene und eines oder mehrere organometallische und/oder anorganische Nebenprodukte, mit einem polaren Extraktionsmittel behandelt wird.

Die in dem erfindungsgemäßen Verfahren behandelte Mischung ist vorzugsweise das direkt bei der Metallocensynthese anfallende Rohprodukt. Das Rohprodukt kann aber auch vorbehandelt sein, z.B. mit Lösungsmitteln.

Unter dem Begriff "anorganisches Nebenprodukt" werden z.B. anorganische Salze oder kovalente Metallhalogenide (z.B. Fluoride, Chloride, Bromide oder Jodide) verstanden. Die anorganischen Salze haben beispielsweise die allgemeine Formel (I)

M²X² ₒ (I),

worin
- M²: für ein Metall der I., II. oder III. Hauptgruppe des Periodensystems der Elemente, Zn oder Cd steht, bevorzugt für Li, Na, K, Mg oder Ca, besonders bevorzugt für Li oder Na,
- X²: gleich oder verschieden sind und für ein Halogenatom wie Fluor, Chlor, Brom oder Jod stehen, bevorzugt für Chlor, Brom oder Jod, besonders bevorzugt für Chlor, und
- o: der Wertigkeit von M² entspricht und 1, 2 oder 3 ist.

Beispiele für Salze der Formel (I) sind LiF, LiCI, LiBr, Lil, NaF, NaCI, NaBr, Nal, KF, KCI, KBr, Kl, CaF₂, CaCl₂, CaBr₂, Cal₂, CsF, CsCI, CsBr, Csl, MgF₂, MgCl₂, MgBrCI, BaCl₂, Bal₂, AlF₃, AlCl₃, AlBrCl₂, ZnCl₂, ZnBr₂, CdCl₂, CdBrI.

Beispiele für kovalente Metallhalogenide sind Halogenide von Metallen der III., IV., V. oder VI., insbesondere der IV. Nebengruppe des Periodensystems der Elemente z.B. TiCl₄, ZrCl₄ oder HfCl₄.

Der Begriff "anorganisches Nebenprodukt" wird auch dann verwendet, wenn das gewünschte Metallocen in der Mischung nur zu einem geringen Teil (etwa kleiner als 50 Gewichtsprozent) enthalten ist und eine oder mehrere der als "anorganische Nebenprodukte" bezeichneten Bestandteile mengenmäßig überwiegen.

Unter dem Begriff "organometallisches Nebenprodukt" werden alle organometallischen Verbindungen verstanden, die das gleiche Metall enthalten wie das gewünschte Metallocen; an dieses Metall ist mindestens ein kohlenstoffhaltiger Ligand, insbesondere π-Ligand wie Cyclopentadienylligand, gebunden. Ausgenommen von dieser Definition ist das gewünschte Metallocen selbst, welches angereichert beziehungsweise gereinigt werden soll.

Beispielsweise fallen unter den Begriff "organometallisches Nebenprodukt" solche Metallocene, die Isomere des gewünschten Metallocens sind, andere Metallocene, die zum gewünschten Metallocen nicht isomer sind, organometallische Verbindungen, die bei der Metallocensynthese durch unvollständige Umsetzung entstehen oder zurückbleiben (z.B. Metallalkylverbindungen wie Butyllithium oder Grignard-Reagenzien), oligomere und polymere Umsetzungsprodukte, sowie Verbindungen die aus dem gewünschten Metallocen oder einem der vorgenannten Nebenprodukte durch Reaktion mit Verunreinigungen, wie Wasser, Alkoholen, Aminen, basischen Verbindungen, Luft oder durch thermische Zersetzung entstehen. Der Begriff "organometallisches Nebenprodukt" wird auch dann verwendet, wenn das gewünschte Metallocen in der Mischung nur zu einem geringen Teil (etwa kleiner als 50 Gewichtsprozent) enthalten ist und eine oder mehrere der als "organometallische Nebenprodukte" bezeichneten Bestandteile mengenmäßig überwiegen.

Das oder die in der Mischung enthaltenen Metallocene enthalten mindestens ein Metallzentralatom, an das mindestens zwei π-Liganden, z.B. Cyclopentadienylliganden gebunden sind. Darüber hinaus können weitere Substituenten, wie z.B. Halogen-, Alkyl-, Alkoxy-, Aryl an das Metallzentralatom gebunden sein. Das Metallzentralatom ist bevorzugt ein Element aus der III., IV., V. oder VI. Nebengruppe des Periodensystems der Elemente, insbesondere aus der IV. Nebengruppe des Periodensystems der Elemente, z.B. Zr oder Hf. Unter Cyclopentadienylligand sind unsubstituierte Cyclopentadienylreste und substituierte Cyclopentadienylreste wie Methylcyclopentadienyl, Indenyl, 2-Methylindenyl, Tetrahydroindenyl, Benzoindenyl, Fluorenyl, Benzofluorenyl, Tetrahydrofluorenyl, Octahydrofluorenylreste zu verstehen. Die π-Liganden, z.B. Cyclopentadienylliganden können unverbrückt oder verbrückt sein, wobei einfache und mehrfache Verbrückungen - auch über Ringsysteme - möglich sind. Die Bezeichnung Metallocen umfaßt auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkerniger Metallocene können sowohl gleichartig, als auch voneinander verschieden sein. Beispiele solcher mehrkerniger Metallocene sind z.B. beschrieben in (EP-A-632063, JP-A-04/80214, JP-A-04/85310, EP-A-654476).

Bevorzugt sind unverbrückte oder verbrückte Metallocene der Formel II, 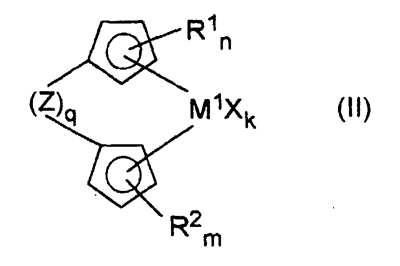 wobei
- M¹: ein Metall der III., IV., V. oder VI. Nebengruppe des Periodensystems der Elemente ist, insbesondere Zr oder Hf,
- R¹: gleich oder verschieden sind und ein Wasserstoffatom, SiR³₃, worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R¹ sind eine C₁-C₃₀ - kohlenstoffhaltige Gruppe wie C₁-C₂₅-Alkyl, z.B. Methyl, Ethyl, tert.-Butyl, Cyclohexyl oder Octyl, fluorhaltiges C₁-C₂₅-Alkyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₆-C₂₄-Aryl, fluorhaltiges C₇-C₃₀-Arylalkyl, fluorhaltiges C₇-C₃₀-Alkylaryl, C₁-C₁₂-Alkoxy sind, oder zwei oder mehrere Reste R¹ können cyclisch so miteinander verbunden sein können, daß die Reste R¹ und die sie verbindenden Atome des Cyclopentadienylringes ein C₄-C₂₄-Ringsystem bilden, welches seinerseits substituiert sein kann,
- R²: gleich oder verschieden sind und ein Wasserstoffatom, SiR³₃, worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R² sind eine C₁-C₃₀ - kohlenstoffhaltige Gruppe wie C₁-C₂₅-Alkyl, z.B. Methyl, Ethyl, tert.-Butyl, Cyclohexyl oder Octyl, fluorhaltiges C₁-C₂₅-Alkyl, C₂-C₂₅-Alkenyl, C₃-C₁₅-Alkylalkenyl, C₆-C₂₄-Aryl, C₅-C₂₄-Heteroaryl, z.B. Pyridyl, Furyl oder Chinolyl, C₇-C₃₀-Arylalkyl, C₇-C₃₀-Alkylaryl, fluorhaltiges C₆-C₂₄-Aryl, fluorhaltiges C₇-C₃₀-Arylalkyl, fluorhaltiges C₇-C₃₀-Alkylaryl, C₁-C₁₂-Alkoxy sind, oder zwei oder mehrere Reste R² können cyclisch so miteinander verbunden sein können, daß die Reste R² und die sie verbindenden Atome des Cyclopentadienylringes ein C₄-C₂₄-Ringsystem bilden, welches seinerseits substituiert sein kann,
- n: gleich 5 für q = 0, und n gleich 4 für q = 1 ist,
- m: gleich 5 für q = 0, und m gleich 4 für q = 1 ist,
- X: gleich oder verschieden sind und ein Halogenatom oder einen kohlenwasserstoffhaltigen Rest mit 1-20 Kohlenstoffatomen bedeuten, z.B. C₁-C₂₀-Alkyl, C₁-C₂₀-Alkoxy oder C₆-C₁₄ Aryloxy,
- k: eine ganze Zahl von 1 bis 4 ist, wobei im Falle von M¹ = Ti, Zr oder Hf k bevorzugt gleich 2 ist,
- Z: eine strukturelle Brücke zwischen den beiden Cyclopentadienylringen bezeichnet, und q ist 0 oder 1.

Beispiele für Z sind Gruppen (M²R⁴R⁵)_{y}, worin M² Kohlenstoff, Silizium, Germanium oder Zinn ist und R⁴ und R⁵ gleich oder verschieden eine C₁-C₂₀-Kohlenwasserstoffgruppe wie C₁-C₁₀-Alkyl oder C₆-C₁₄-Aryl bedeuten und y gleich 1 oder 2 ist. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)₂Si, (C₆H₅)₂Ge, (C₆H₅)₂Sn, (CH₂)₄Si, CH₂Si(CH₃)₂, o-C₆H₄ oder 2,2'-(C₆H₄)₂. Z kann auch mit einem oder mehreren Resten R¹ und/oder R² ein mono- oder polycyclisches Ringsystem bilden.

Besonders bevorzugt sind chirale verbrückte Metallocene der Formel II, insbesondere solche in denen q gleich 1 ist und einer oder beide Cyclopentadienylringe so substituiert sind, daß sie einen Indenylring darstellen. Der Indenylring ist bevorzugt substituiert, insbesondere in 2-, 2,4-, 2,4,5-, 2,4,6-, 2,4,7- oder 2,4,5,6-Stellung, mit C₁-C₂₀-kohlenstoffhaltigen Gruppen wie C₁-C₁₀-Alkyl oder C₆-C₂₀-Aryl, wobei auch zwei oder mehrere Substituenten ein Ringsystem bilden können.

Die nachfolgenden Beispiele für Metallocene dienen der Illustration der Erfindung, haben aber keinen einschränkenden Charakter:
Bis(cyclopentadienyl)zirkoniumdichlorid
Bis(indenyl)zirkoniumdichlorid
Bis(fluorenyl)zirkoniumdichlorid
(Indenyl)(fluorenyl)zirkoniumdichlorid
(3-Methyl-5-naphthylindenyl)(2,7-di-tert-butylfluorenyl)zirkoniumdichlorid
(3-Methyl-5-naphthylindenyl)(3,4,7-trimethoxyfluorenyl)zirkoniumdichlorid
(Pentamethylcyclopentadienyl)(tetrahydroindenyl)zirkoniumdichlorid
(Cyclopentadienyl)(1-octen-8-ylcyclopentadienyl)zirkoniumdichlorid
(Indenyl)(1-buten-4-ylcyclopentadienyl)zirkoniumdichlorid
[1,3-Bis(trimethylsilyl)cyclopentadienyl](3,4-benzofluorenyl)zirkoniumdichlorid
Bis(cyclopentadienyl)titandichlorid
Dimethylsilandiylbis(indenyl)zirkoniumdichlorid
Dimethylsilandiylbis(tetrahydroindenyl)zirkoniumdichlorid
Dimethylsilandiyl(cyclopentadienyl)(indenyl)zirkoniumdichlorid
Dimethylsilandiylbis(2-methylindenyl)zirkoniumdichlorid
Dimethylsilandiylbis(2-ethylindenyl)zirkoniumdichlorid
Dimethylsilandiylbis(2-methyl-4,5-benzoindenyl)zirkoniumdichlorid
Dimethylsilandiylbis(2-ethyl-4,5-benzoindenyl)zirkoniumdichlorid
Dimethylsilandiylbis(4,5-dihydro-8-methyl-7H-cyclopent[e]acenaphthylen-7-yliden]zirkoniumdichlorid
Dimethylsilandiyl(2-methyl-4,5-benzoindenyl)(2-methyl-4-phenylindenyl)zirkoniumdichlorid
Dimethylsilandiyl(2-ethyl-4,5-benzoindenyl)(2-methyl-4-phenylindenyl)zirkoniumdichlorid
Dimethylsilandiyl(2-methyl-4,5-benzoindenyl)(2-ethyl-4-phenylindenyl)zirkoniumdichlorid
Dimethylsilandiyl(2-ethyl-4,5-benzoindenyl)(2-ethyl-4-naphthylindenyl)zirkoniumdichlorid
Dimethylsilandiyl(2-methylindenyl)(4-phenylindenyl)zirkoniumdichlorid
Dimethylsilandiylbis(2-methyl-4-phenylindenyl)zirkoniumdichlorid
Dimethylsilandiylbis(2-ethyl-4-phenylindenyl)zirkoniumdichlorid
Dimethylsilandiylbis(2-methyl-4,6-diisopropylindenyl)zirkoniumdichlorid
Dimethylsilandiylbis(2-ethyl-4,6-diisopropylindenyl)zirkoniumdichlorid
Dimethylsilandiylbis(2-methyl-4-naphthylindenyl)zirkoniumdichlorid
Dimethylsilandiylbis(2-ethyl-4-naphthylindenyl)zirkoniumdichlorid
Methylphenylsilandiylbis(indenyl)zirkoniumdichlorid
Methylphenylsilandiyl(cyclopentadienyl)(indenyl)zirkoniumdichlorid
Methylphenylsilandiylbis(tetrahydroindenyl)zirkoniumdichlorid
Methylphenylsilandiylbis(2-methylindenyl)zirkoniumdichlorid
Methylphenylsilandiylbis(2-ethylindenyl)zirkoniumdichlorid
Methylphenylsilandiylbis(2-methyl-4,5-benzoindenyl)zirkoniumdichiorid
Methylphenylsilandiylbis(2-ethyl-4,5-benzoindenyl)zirkoniumdichlorid
Methylphenylsilandiylbis(4,5-dihydro-8-methyl-7H-cyclopent[e]acenaphthylen-7-yliden]zirkoniumdichlorid
Methylphenylsilandiyl(2-methyl-4,5-benzoindenyl)(2-methyl-4-phenylindenyl)zirkoniumdichlorid
Methylphenylsilandiyl(2-ethyl-4,5-benzoindenyl)(2-methyl-4-phenylindenyl)zirkoniumdichlorid
Methylphenylsilandiyl(2-methyl-4,5-benzoindenyl)(2-ethyl-4-phenylindenyl)zirkoniumdichlorid
Methylphenylsilandiyl(2-ethyl-4,5-benzoindenyl)(2-ethyl-4-naphthylindenyl)zirkoniumdichlorid
Methylphenylsilandiyl(2-methylindenyl)(4-phenylindenyl)zirkoniumdichlorid
Methylphenylsilandiylbis(2-methyl-4-phenylindenyl)zirkoniumdichlorid
Methylphenylsilandiylbis(2-ethyl-4-phenylindenyl)zirkoniumdichlorid
Methylphenylsilandiylbis(2-methyl-4,6-diisopropylindenyl)zirkoniumdichlorid
Methylphenylsilandiylbis(2-ethyl-4,6-diisopropylindenyl)zirkoniumdichlorid
Methytphenylsilandiylbis(2-methyl-4-naphthylindenyl)zirkoniumdichlorid
Methylphenylsilandiylbis(2-ethyl-4-naphthylindenyl)zirkoniumdichlorid
Diphenylsilandiylbis(indenyl)zirkoniumdichlorid
Diphenylsilandiylbis(2-methylindenyl)zirkoniumdichlorid
Diphenylsilandiylbis(2-ethylindenyl)zirkoniumdichlorid
Diphenylsilandiyl(cyclopentadienyl)(indenyl)zirkoniumdichlorid
Diphenylsilandiylbis(2-methyl-4,5-benzoindenyl)zirkoniumdichlorid
Diphenylsilandiylbis(2-ethyl-4,5-benzoindenyl)zirkoniumdichlorid
Diphenylsilandiyl(2-methyl-4,5-benzoindenyl)(2-methyl-4-phenylindenyl)zirkoniumdichlorid
Diphenylsilandiyl(2-ethyl-4,5-benzoindenyl)(2-methyl-4-phenylindenyl)zirkoniumdichlorid
Diphenylsilandiyl(2-methyl-4,5-benzoindenyl)(2-ethyl-4-phenylindenyl)zirkoniumdichlorid
Diphenylsilandiyl(2-ethyl-4,5-benzoindenyl)(2-ethyl-4-naphthylindenyl)zirkoniumdichlorid
Diphenylsilandiyl(2-methylindenyl)(4-phenylindenyl)zirkoniumdichlorid
Diphenylsilandiylbis(2-methyl-4-phenylindenyl)zirkoniumdichlorid
Diphenylsilandiylbis(2-ethyl-4-phenylindenyl)zirkoniumdichlorid
Diphenylsilandiylbis(2-methyl-4,6-diisopropylindenyl)zirkoniumdichlorid
Diphenylsilandiylbis(2-ethyl-4,6-diisopropylindenyl)zirkoniumdichlorid
Diphenylsilandiylbis(2-methyl-4-naphthylindenyl)zirkoniumdichlorid
Diphenylsilandiylbis(2-ethyl-4-naphthylindenyl)zirkoniumdichlorid
1-Silacyclopentan-1,1-bis(indenyl)zirkoniumdichlorid
1-Silacyclopentan-1,1-bis(2-methylindenyl)zirkoniumdichlorid
1-Silacyclopentan-1,1-bis(2-ethylindenyl)zirkoniumdichlorid
1-Silacyclopentan-1,1-bis(2-methyl-4,5-benzoindenyl)zirkoniumdichlorid
1-Silacyclopentan-1,1-bis(2-ethyl-4,5-benzoindenyl)zirkoniumdichlorid
1-Silacyclopentan-1-(2-methyl-4,5-benzoindenyl)-1-(2-methyl-4-phenylindenyl)zirkoniumdichlorid
1-Silacyclopentan-1-(2-ethyl-4,5-benzoindenyl)-1-(2-methyl-4-phenylindenyl)zirkoniumdichlorid
1-Silacyclopentan-1-(2-methyl-4,5-benzoindenyl)-1-(2-ethyl-4-phenylindenyl)zirkoniumdichlorid
1-Silacyclopentan-1-(2-ethyl-4,5-benzoindenyl)-1-(2-ethyl-4-naphthylindenyl)zirkoniumdichlorid
1-Silacyclopentan-1-(2-methylindenyl)-1-(4-phenylindenyl)zirkoniumdichlorid
1-Silacyclopentan-1,1-bis(2-methyl-4-phenylindenyl)zirkoniumdichlorid
1-Silacyclopentan-1,1-bis(2-ethyl-4-phenylindenyl)zirkoniumdichlorid
1-Silacyclopentan-1,1-bis(2-methyl-4,6-diisopropylindenyl)zirkoniumdichlorid
1-Silacyclopentan-1,1-bis(2-ethyl-4,6-diisopropylindenyl)zirkoniumdichlorid
1-Silacyclopentan-1,1-bis(2-methyl-4-naphthylindenyl)zirkoniumdichlorid
1-Silacyclopentan-1,1-bis(2-ethyl-4-naphthylindenyl)zirkoniumdichlorid
Bis(cyclopentadienyl)titandichlorid
Ethylen-1,2-bis(indenyl)zirkoniumdichlorid
Ethylen-1,2-bis(tetrahydroindenyl)zirkoniumdichlorid
Ethylen-1-cyclopentadienyl-2-(1-indenyl)zirkoniumdichlorid
Ethylen-1-cyclopentadienyl-2-(2-indenyl)zirkoniumdichlorid
Ethylen-1-cyclopentadienyl-2-(2-methyl-1-indenyl)zirkoniumdichlorid
Ethylen-1,2-bis(2-methylindenyl)zirkoniumdichlorid
Ethylen-1,2-bis(2-ethylindenyl)zirkoniumdichlorid
Ethylen-1,2-bis(2-methyl-4,5-benzoindenyl)zirkoniumdichlorid
Ethylen-1,2-bis(2-ethyl-4,5-benzoindenyl)zirkoniumdichlorid
Ethylen-1,2-bis(4,5-dihydro-8-methyl-7H-cyclopent[e]acenaphthylen-7-yliden]zirkoniumdichlorid
Ethylen-1-(2-methyl-4,5-benzoindenyl)-2-(2-methyl-4-phenylindenyl)zirkoniumdichlorid
Ethylen-1-(2-ethyl-4,5-benzoindenyl)-2-(2-methyl-4-phenylindenyl)zirkoniumdichlorid
Ethylen-1-(2-methyl-4,5-benzoindenyl)-2-(2-ethyl-4-phenylindenyl)zirkoniumdichlorid
Ethylen-1-(2-ethyl-4,5-benzoindenyl)-2-(2-ethyl-4-naphthylindenyl)zirkoniumdichlorid
Ethylen-1-(2-methylindenyl)-2-(4-phenylindenyl)zirkoniumdichlorid
Ethylen-1,2-bis(2-methyl-4-phenylindenyl)zirkoniumdichlorid
Ethylen-1,2-bis(2-ethyl-4-phenylindenyl)zirkoniumdichlorid
Ethylen-1,2-bis(2-methyl-4,6-diisopropylindenyl)zirkoniumdichlorid
Ethylen-1,2-bis(2-ethyl-4,6-diisopropylindenyl)zirkoniumdichlorid
Ethylen-1,2-bis(2-methyl-4-naphthylindenyl)zirkoniumdichlorid
Ethylen-1,2-bis(2-ethyl-4-naphthylindenyl)zirkoniumdichlorid
Propylen-2,2-bis(indenyl)zirkoniumdichlorid
Propylen-2-cyclopentadienyl-2-(1-indenyl)zirkoniumdichlorid
Propylen-2-cyclopentadienyl-2-(4-phenyl-1-indenyl)zirkoniumdichlorid
Propylen-2-cyclopentadienyl-2-(9-fluorenyl)zirkoniumdichlorid
Propylen-2-cyclopentadienyl-2-(2,7-dimethoxy-9-fluorenyl)zirkoniumdichlorid
Propylen-2-cyclopentadienyl-2-(2,7-di-tert-butyl-9-fluorenyl)zirkoniumdichlorid
Propylen-2-cyclopentadienyl-2-(2,7-dibromo-9-fluorenyl)zirkoniumdichlorid
Propylen-2-cyclopentadienyl-2-(2,7-diphenyl-9-fluorenyl)zirkoniumdichlorid
Propylen-2-cyclopentadienyl-2-(2,7-dimethyl-9-fluorenyt)zirkoniurndichlorid
Propylen-2-(3-methylcyclopentadienyl)-2-(2,7-dibutyl-9-fluorenyl)zirkoniumdichlorid
Propylen-2-(3-tert-butylcyclopentadienyl)-2-(2,7-dibutyl-9-fluorenyl)zirkoniumdichlorid
Propylen-2-(3-trimethylsilylcyclopentadienyl)-2-(3,6-di-tert-butyl-9-fluorenyl)zirkoniumdichlorid
Propylen-2-cyclopentadienyl-2-[2,7-bis(3-buten-1-yl)-9-fluorenyl]zirkoniumdichlorid
Propylen-2-cyclopentadienyl-2-(3-tert-butyl-9-fluorenyl)zirkoniumdichlorid
Propylen-2,2-bis(tetrahydroindenyl)zirkoniumdichlorid
Propylen-2,2-bis(2-methylindenyl)zirkoniumdichlorid
Propylen-2,2-bis(2-ethylindenyl)zirkoniumdichlorid
Propylen-2,2-bis(2-methyl-4,5-benzoindenyl)zirkoniumdichlorid
Propylen-2,2-bis(2-ethyl-4,5-benzoindenyl)zirkoniumdichlorid
Propylen-2,2-bis(4,5-dihydro-8-methyl-7H-cyclopent[e]acenaphthylen-7-yliden]zirkoniumdichlorid
Propylen-2-(2-methyl-4,5-benzoindenyl)-2-(2-methyl-4-phenylindenyl)zirkoniumdichlorid
Propylen-2-(2-ethyl-4,5-benzoindenyl)-2-(2-methyl-4-phenylindenyl)zirkoniumdichlorid
Propylen-2-(2-methyl-4,5-benzoindenyl)-2-(2-ethyl-4-phenylindenyl)zirkoniumdichlorid
Propylen-2-(2-ethyl-4,5-benzoindenyl)-2-(2-ethyl-4-naphthylindenyl)zirkoniumdichlorid
Propylen-2-(2-methylindenyl)-2-(4-phenylindenyl)zirkoniumdichlorid
Propylen-2,2-bis(2-methyl-4-phenylindenyl)zirkoniumdichlorid
Propylen-2,2-bis(2-ethyl-4-phenylindenyl)zirkoniumdichlorid
Propylen-2,2-bis(2-methyl-4,6-diisopropylindenyl)zirkoniumdichlorid
Propylen-2,2-bis(2-ethyl-4,6-diisopropylindenyl)zirkoniumdichlorid
Propylen-2,2-bis(2-methyl-4-naphthylindenyl)zirkoniumdichlorid
Propylen-2, 2-bis(2-ethyl-4-naphthylindenyl)zirkoniumdichlorid
1,6-Bis[methylsilylbis(2-methyl-4-phenylindenyl)zirkoniumdichlorid]hexan
1,6-Bis[methylsilylbis(2-methyl-4,5-benzoindenyl)zirkoniumdichlorid]hexan
1,6-Bis(methylsilylbis(2-ethyl-4-phenylindenyl)zirkoniumdichloridlhexan
1,6-Bis[methylsilylbis(2-methyl-4-naphthylindenyl)zirkoniumdichlorid]hexan
1,6-Bis[methylsilylbis(2-methyl-4,6-diisopropylindenyl)zirkoniumdichlorid]hexan
1,6-Bis[methylsilyl(2-methyl-4-phenylindenyl)(4,5-benzoindenyl)zirkoniumdichlorid]hexan
1-[Methylsilylbis(tetrahydroindenyl)zirkoniumdichlorid]-6-[ethylstannyl(cyclopentadienyl)-(fluorenyl)zirkoniumdichlorid]hexan
1,6-Disila-1,1,6,6-tetramethyl-1,6-bis[methylsilylbis(2-methyl-4-phenylindenyl)zirkonium-dichlorid]hexan
1,4-Disila-1,4-bis[methylsilylbis(2-methyl-4-phenylindenyl)zirkoniumdichlorid]cyclohexan
[1,4-Bis(1-indenyl)-1,1,4,4-tetramethyl-1,4-disilabutan]bis(pentamethylcyclopentadienylzirkoniumdichlorid)
[1,4-Bis(9-fluorenyl)-1,1,4,4-tetramethyl-1,4-disilabutan]bis(cyclopentadienylzirkoniumdichlorid)
[1,4-Bis(1-indenyl)-1,1,4,4-tetramethyl-1,4-disilabutan]bis(cyclopentadienylzirkoniumdichlorid)
[1-(1-indenyl)-6-(2-phenyl-1-indenyl)-1,1,6,6-tetraethyl-1,6-disila-4-oxahexanlbis(tert-butylcyclopentadienylzirkoniumdichlorid)
[1,10-Bis(2,3-dimethyl-1-indenyl)-1,1,10,10-tetramethyl-1,10-digermadecan]bis(2-methyl-4-phenylindenylzirkoniumdichlorid)
(1-Methyl-3-tert-butylcyclopentadienyl) (1-phenyl-4-methoxy-7-chlorofluorenyl)zirkoniumdichlorid
(4,7-Dichloroindenyl)(3,6-dimesitylfluorenyl)zirkoniumdichlorid
Bis(2,7-di-tert-butyl-9-cyclohexylfluorenyl)zirkoniumdichlorid
(2,7-Dimesitylfluorenyl) [2,7-bis(1-naphthyl)fluorenyl]zirkoniumdichlorid Dimethylsilylbis(fluorenyl)zirkoniumdichlorid
Dibutylstannylbis(2-methylfluorenyl)zirkoniumdichlorid
1,1,2,2-Tetraethyldisilandiyl(2-methylindenyl)(4-phenylfluorenyl)zirkoniumdichlorid
Propylen-1-(2-indenyl)-2-(9-fluorenyl)zirkoniumdichlorid
1,1-Dimethyl-1-silaethylenbis(fluorenyl)zirkoniumdichlorid
[4-(Cyclopentadienyl)-4,7,7-trimethyl(tetrahydroindenyl)]zirkoniumdichlorid
[4-(Cyclopentadienyl)-4,7-dimethyl-7-phenyl(5,6-dimethyltetrahydroindenyl)]zirkoniumdichlorid
[4-(Cyclopentadienyl)-4,7-dimethyl-7-(1-naphthyl) (7-phenyltetrahydroindenyl)]zirkoniumdichlorid
[4-(Cyclopentadienyl)-4,7-dimethyl-7-butyl(6,6-diethyltetrahydroindenyl)]zirkoniumdichlorid
[4-(3-tert-Butylcyclopentadienyl)-4,7,7-trimethyl(tetrahydroindenyl)]zirkoniumdichlorid
[4-(1-Indenyl)-4,7,7-trimethyl(tetrahydroindenyl)]zirkoniumdichlorid
Bis(cyclopentadienyl)hafniumdibromid
Bis(indenyl)vanadiumdiiodid
Bis(fluorenyl)scandiumchlorid
(Indenyl)(fluorenyl)niobiumdiiodid
(2-Methyl-7-naphthylindenyl)(2,6-di-tert-butylfluorenyl)titandichlorid
(Pentamethylcyclopentadienyl)(tetrahydroindenyl)hafniumbromidchlorid
(Cyclopentadienyl)(1-octen-8-ylcyclopentadienyl)hafniumdichlorid
(Indenyl)(2-buten-4-ylcyclopentadienyl)titandichlorid
[1,3-Bis(trimethylsilyl)cyclopentadienyl](3,4-benzofluorenyl)niobiumdichlorid
Bis(cyclopentadienyl)titandibromid
Dimethylsilandiylbis(indenyl)titandibromid
Dimethylsilandiylbis(tetrahydroindenyl)hafniumdichlorid
Dimethylsilandiyl(cyclopentadienyl)(indenyl)titandichlorid
Dimethylsilandiylbis(2-methylindenyl)hafniumdichlorid
Dimethylsilandiylbis(2-ethylindenyl)scandiumchlorid
Dimethylsilandiylbis(2-butyl-4,5-benzoindenyl)niobiumdiiodid
Dimethylsilandiylbis(2-ethyl-4,5-benzoindenyl)titandiiodid
Dimethylsilandiylbis(4,5-dihydro-8-methyl-7H-cyclopent[e]acenaphthylen-7-yliden]titandichlorid
Dimethylsilandiyl(2-methyl-4,5-benzoindenyl)(2-methyl-4-phenylindenyl)titandichlorid
Dimethylsilandiyl(2-ethyl-4,5-benzoindenyl)(2-methyl-4-phenylindenyl)hafniumdibromid
Dimethylsilandiyl(2-methyl-4,5-benzoindenyl)(2-ethyl-4-phenylindenyl)scandiumchlorid
Dimethylsilandiyl(2-ethyl-4,5-benzoindenyl)(2-ethyl-4-naphthylindenyl)titandibromid
Dimethylsilandiyl(2-methylindenyl)(4-phenylindenyl)hafniumdibromid
Dimethylsilandiylbis(2-methyl-4-phenylindenyl)niobiumdimethoxid
Dimethylsilandiylbis(2-ethyl-4-phenylindenyl)vanadiumdimethoxid
Dimethylsilandiylbis(2-methyl-4,6-diisopropylindenyl)hafniumdichlorid
Dimethylsilandiylbis(2-ethyl-4,6-diisopropylindenyl)vanadiumdichlorid
Dimethylsilandiylbis(2-methyl-4-naphthylindenyl)hafniumbromidchlorid
Dimethylsilandiylbis(2-ethyl-4-naphthylindenyl)titandichlorid
Methylphenylsilandiylbis(indenyl)titandichlorid
Methylphenylsilandiyl(cyclopentadienyl)(indenyl)hafniumdichlorid
Methylphenylsilandiylbis(tetrahydroindenyl)hafniumdichlorid
Methylphenylsilandiylbis(2-methylindenyl)titandichlorid
Methylphenylsilandiylbis(2-ethylindenyl)hafniumdichlorid
Methylphenylsilandiylbis(2-methyl-4,5-benzoindenyl)hafniumdichlorid
Methylphenylsilandiylbis(2-ethyl-4,5-benzoindenyl)vanadiumdiiodid
Methylphenylsilandiylbis(4,5-dihydro-8-methyl-7H-cyclopent[e]acenaphthylen-7-yliden]titandiiodid
Methylphenylsilandiyl(2-methyl-4,5-benzoindenyl)(2-methyl-4-phenylindenyl)titanbromidchlorid
Methylphenylsilandiyl(2-ethyl-4,5-benzoindenyl)(2-methyl-4-phenylindenyl)titandibromid
Methylphenylsilandiyl(2-methyl-4,5-benzoindenyl)(2-ethyl-4-phenylindenyl)hafniumdibromid
Methylphenylsilandiyl(2-ethyl-4,5-benzoindenyl)(2-ethyl-4-naphthylindenyl)hafniumdibromid
Methylphenylsilandiyl(2-methylindenyl)(4-phenylindenyl)titandichlorid
Methylphenylsilandiylbis(2-methyl-4-phenylindenyl)hafniumdimethoxid
Methylphenylsilandiylbis(2-ethyl-4-phenylindenyl)vanadiumdichlorid
Methylphenylsilandiylbis(2-methyl-4,6-diisopropylindenyl)titandichlorid
Methylphenylsilandiylbis(2-ethyl-4,6-diisopropylindenyl)hafniumdichlorid
Methylphenylsilandiylbis(2-methyl-4-naphthylindenyl)hafniumdichlorid
Methylphenylsilandiylbis(2-ethyl-4-naphthylindenyl)titandichlorid
Diphenylsilandiylbis(indenyl)titandichlorid
Diphenylsilandiylbis(2-methylindenyl)hafniumdichlorid
Diphenylsilandiylbis(2-ethylindenyl)titandichlorid
Diphenylsilandiyl(cyclopentadienyl)(indenyl)hafniumdichlorid
Diphenylsilandiylbis(2-methyl-4,5-benzoindenyl)titandichlorid
Diphenylsilandiylbis(2-ethyl-4,5-benzoindenyl)hafniumdichlorid
Diphenylsilandiyl(2-methyl-4,5-benzoindenyl)(2-methyl-4-phenylindenyl)hafniumdichlorid
Diphenylsilandiyl(2-ethyl-4,5-benzoindenyl)(2-methyl-4-phenylindenyl)titandiiodid
Diphenylsilandiyl(2-methyl-4,5-benzoindenyl)(2-ethyl-4-phenylindenyl)hafniumdiiodid
Diphenylsilandiyl(2-ethyl-4,5-benzoindenyl)(2-ethyl-4-naphthylindenyl)titandibromid
Diphenylsilandiyl(2-methylindenyl)(4-phenylindenyl)titandibromid
Diphenylsilandiylbis(2-methyl-4-phenylindenyl)titandibromid
Diphenylsilandiylbis(2-ethyl-4-phenylindenyl)hafniumdibromid
Diphenylsilandiylbis(2-methyl-4,6-diisopropylindenyl)hafniumdichlorid
Diphenylsilandiylbis(2-ethyl-4,6-diisopropylindenyl)hafniumdibromid
Diphenylsilandiylbis(2-methyl-4-naphthylindenyl)hafniumdichlorid
Diphenylsilandiylbis(2-ethyl-4-naphthylindenyl)titandichlorid
1-Silacyclopentan-1,1-bis(indenyl)hafniumdimethoxid
1-Silacyclopentan-1,1-bis(2-methylindenyl)hafniumdibromid
1-Silacyclopentan-1,1-bis(2-ethylindenyl)hafniumdimethoxid
1-Silacyclopentan-1,1-bis(2-methyl-4,5-benzoindenyl)titandimethoxid
1-Silacyclopentan-1,1-bis(2-ethyl-4,5-benzoindenyl)hafniumdichlorid
1-Sitacyclopentan-1-(2-methyl-4,5-benzoindenyl)-1-(2-methyl-4-phenylindenyl)scandiumchlorid
1-Silacyclopentan-1-(2-ethyl-4,5-benzoindenyl)-1-(2-methyl-4-phenylindenyl)hafniumdichlorid
1-Silacyclopentan-1-(2-methyl-4,5-benzoindenyl)-1-(2-ethyl-4-phenylindenyl)titandichlorid
1-Silacyclopentan-1-(2-ethyl-4,5-benzoindenyl)-1-(2-ethyl-4-naphthylindenyl)hafniumdichlorid
1-Silacyclopentan-1-(2-methylindenyl)-1-(4-phenylindenyl)hafniumdichlorid
1-Silacyclopentan-1,1-bis(2-methyl-4-phenylindenyl)hafniumdichlorid
1-Silacyclopentan-1,1-bis(2-ethyl-4-phenylindenyl)titanbromidchlorid
1-Silacyclopentan-1,1-bis(2-methyl-4,6-diisopropylindenyl)titandibromid
1-Silacyclopentan-1,1-bis(2-ethyl-4, 6-diisopropylindenyl)titandichlorid
1-Silacyclopentan-1,1-bis(2-methyl-4-naphthylindenyl)scandiumchlorid
1-Silacyclopentan-1,1-bis(2-ethyl-4-naphthylindenyl)hafniumdichlorid
Bis(cyclopentadienyl)titandichlorid
Ethylen-1,2-bis(indenyl)scandiumchlorid
Ethylen-1,2-bis(tetrahydroindenyl)titandichlorid
Ethylen-1-cyclopentadienyl-2-(1-indenyl)hafniumdichlorid
Ethylen-1-cyclopentadienyl-2-(2-indenyl)titanbromidchlorid
Ethylen-1-cyclopentadienyl-2-(2-methyl-1-indenyl)hafniumdimethoxid
Ethylen-1,2-bis(2-methylindenyl)hafniumdiiodid
Ethylen-1,2-bis(2-ethylindenyl)hafniumdiiodid
Ethylen-1,2-bis(2-methyl-4,5-benzoindenyl)hafniumdichlorid
Ethylen-1,2-bis(2-ethyl-4,5-benzoindenyl)titandichlorid
Ethylen-1,2-bis(4,5-dihydro-8-methyl-7H-cyclopent[e]acenaphthylen-7-yliden]titandibromid
Ethylen-1-(2-methyl-4,5-benzoindenyl)-2-(2-methyl-4-phenylindenyl)titandibromid
Ethylen-1-(2-ethyl-4,5-benzoindenyl)-2-(2-methyl-4-phenylindenyl)titandichlorid
Ethylen-1-(2-methyl-4,5-benzoindenyl)-2-(2-ethyl-4-phenylindenyl)scandiumchlorid
Ethylen-1-(2-ethyl-4,5-benzoindenyl)-2-(2-ethyl-4-naphthylindenyl)hafniumdichlorid
Ethylen-1-(2-methylindenyl)-2-(4-phenylindenyl)titandichlorid
Ethylen-1,2-bis(2-methyl-4-phenylindenyl)hafniumdichlorid
Ethylen-1,2-bis(2-ethyl-4-phenylindenyl)hafniumdichlorid
Ethylen-1,2-bis(2-methyl-4,6-diisopropylindenyl)hafniumdichlorid
Ethylen-1,2-bis(2-ethyl-4,6-diisopropylindenyl)titandichlorid
Ethylen-1,2-bis(2-methyl-4-naphthylindenyl)titandichlorid
Ethylen-1,2-bis(2-ethyl-4-naphthylindenyl)hafniumdichlorid
Propylen-2,2-bis(indenyl)hafniumdichlorid
Propylen-2-cyclopentadienyl-2-(1-indenyl)titandichlorid
Propylen-2-cyclopentadienyl-2-(4-phenyl-1-indenyl)titandichlorid
Propylen-2-cyclopentadienyl-2-(9-fluorenyl)hafniumdichlorid
Propylen-2-cyclopentadienyl-2-(2,7-dimethoxy-9-fluorenyl)hafniumdichlorid
Propylen-2-cyclopentadienyl-2-(2,7-di-tert-butyl-9-fluorenyl)hafniumdiiodid
Propylen-2-cyclopentadienyl-2-(2,7-dibromo-9-fluorenyl)titandiiodid
Propylen-2-cyclopentadienyl-2-(2,7-diphenyl-9-fluorenyl)hafniumdichlorid
Propylen-2-cyclopentadienyl-2-(2,7-dimethyl-9-fluorenyl)titandichlorid
Propylen-2-(3-methylcyclopentadienyl)-2-(2,7-dibutyl-9-fluorenyl)hafniumdifluorid
Propylen-2-(3-tert-butylcyclopentadienyl)-2-(2,7-dibutyl-9-fluorenyl)titandifluorid
Propylen-2-(3-trimethylsilylcyclopentadienyl)-2-(3,6-di-tert-butyl-9-fluorenyl)titandifluorid
Propylen-2-cyclopentadienyl-2-[2,7-bis(3-buten-1-yl)-9-fluorenyl]hafniumdiiodid
Propylen-2-cyclopentadienyl-2-(3-tert-butyl-9-fluorenyl)titandibromid
Propylen-2,2-bis(tetrahydroindenyl)hafniumdibromid
Propylen-2,2-bis(2-methylindenyl)hafniumdichlorid
Propylen-2,2-bis(2-ethylindenyl)titandichlorid
Propylen-2,2-bis(2-methyl-4,5-benzoindenyl)titandichlorid
Propylen-2,2-bis(2-ethyl-4,5-benzoindenyl)hafniumdichlorid
Propylen-2,2-bis(4,5-dihydro-8-methyl-7H-cyclopent[e]acenaphthylen-7-yliden]hafniumdichlorid
Propylen-2-(2-methyl-4,5-benzoindenyl)-2-(2-methyl-4-phenylindenyl)hafniumdichlorid
Propylen-2-(2-ethyl-4,5-benzoindenyl)-2-(2-methyl-4-phenylindenyl)titandichlorid
Propylen-2-(2-methyl-4,5-benzoindenyl)-2-(2-ethyl-4-phenylindenyl)hafniumdichlorid
Propylen-2-(2-ethyl-4,5-benzoindenyl)-2-(2-ethyl-4-naphthylindenyl)titandichlorid
Propylen-2-(2-methylindenyl)-2-(4-phenylindenyl) hafniumdichlorid
Propylen-2,2-bis(2-methyl-4-phenylindenyl)titandiiodid
Propylen-2,2-bis(2-ethyl-4-phenylindenyl)hafniumdiiodid
Propylen-2,2-bis(2-methyl-4,6-diisopropylindenyl)titandiiodid
Propylen-2,2-bis(2-ethyl-4,6-diisopropylindenyl)hafniumdichlorid
Propylen-2,2-bis(2-methyl-4-naphthylindenyl)titandichlorid
Propylen-2, 2-bis(2-ethyl-4-naphthylindenyl)titandichlorid
1,6-Bis[methylsilylbis(2-methyl-4-phenylindenyl)hafniumdichlorid]hexan
1,6-Bis[methylsilylbis(2-methyl-4,5-benzoindenyl)titandichlorid]hexan
1,6-Bis[methylsilylbis(2-ethyl-4-phenylindenyl)hafniumdichlorid]hexan
1,6-Bis[methylsilylbis(2-methyl-4-naphthylindenyl)titandichlorid]hexan
1,6-Bis[methylsilylbis(2-methyl-4,6-diisopropylindenyl)hafniumdichlorid]hexan
1,6-Bis[methylsilyl(2-methyl-4-phenylindenyl)(4,5-benzoindenyl)titandichlorid]hexan
1-[Methylsilylbis(tetrahydroindenyl)hafniumdichlorid]-6-[ethylstannyl(cyclopentadienyl)-(fluorenyl)titandichlorid]hexan
1,6-Disila-1,1,6,6-tetramethyl-1,6-bis[methylsilylbis(2-methyl-4-phenylindenyl)hafnium-diiodid]hexan
1,4-Disila-1,4-bis[methylsilylbis(2-methyl-4-phenylindenyl)hafniumdiiodid]cyclohexan
[1,4-Bis(1-indenyl)-1,1,4,4-tetramethyl-1,4-disilabutan]bis(pentamethylcyclopentadienylhafniumdiiodid)
[1,4-Bis(9-fluorenyl)-1,1,4,4-tetramethyl-1,4-disilabutan]bis(cyclopentadienylhafniumdichlorid)
[1,4-Bis(1-indenyl)-1,1,4,4-tetramethyl-1,4-disilabutan]bis(cyclopentadienyltitandichlorid)
[1-(1-indenyl)-6-(2-phenyl-1-indenyl)-1,1,6,6-tetraethyl-1,6-disila-4-oxahexan]bis(tert-butylcyclopentadienyltitandibromid)
[1,10-Bis(2,3-dimethyl-1-indenyl)-1,1,10,10-tetramethyl-1,10-digermadecan]bis(2-methyl-4-phenylindenylhafniumdibromid)
(1-Methyl-3-tert-butylcyclopentadienyl)(1-phenyl-4-methoxy-7-chlorofluorenyl)titandichlorid
(4,7-Dichloroindenyl)(3,6-dimesitylfluorenyl)titandichlorid
Bis(2,7-di-tert-butyl-9-cyclohexylfluorenyl)hafniumdiiodid
(2,7-Dimesitylfluorenyl)[2,7-bis(1-naphthyl)fluorenyl]hafniumdichlorid
Dimethylsilylbis(fluorenyl)titandichlorid
Dibutylstannylbis(2-methylfluorenyl)hafniumdichlorid
1,1,2,2-Tetraethyldisilandiyl(2-methylindenyl)(4-phenylfluorenyl)tiandichlorid
Propylen-1-(2-indenyl)-2-(9-fluorenyl)hafniumdichlorid
1,1-Dimethyl-1-silaethylenbis(fluorenyl)titandichlorid
[4-(Cyclopentadienyl)-4,7,7-trimethyl(tetrahydroindenyl)]titandifluorid
[4-(Cyclopentadienyl)-4,7-dimethyl-7-phenyl(5,6-dimethyltetrahydroindenyl)]hafniumdifluorid
[4-(Cyclopentadienyl)-4,7-dimethyl-7-(1-naphthyl)(7-phenyltetrahydroindenyl)]titandichlorid
[4-(Cyclopentadienyl)-4,7-dimethyl-7-butyl(6,6-diethyltetrahydroindenyl)]hafniumdichlorid
[4-(3-tert-Butylcyclopentadienyl)-4,7,7-trimethyl(tetrahydroindenyl)]hafniumdibromid
[4-(1-Indenyl)-4,7,7-trimethyl(tetrahydroindenyl)]titandibromid

Unter dem Begriff "polares Extraktionsmittel" werden polare Lösungsmittel, Mischungen verschiedener polarer Lösungsmittel oder auch Mischungen eines oder mehrerer polarer Lösungsmittel mit einem oder mehreren unpolaren Lösungsmittel verstanden. Das erfindungsgemäße polare Extraktionsmittel enthält 5 bis 100 Vol.-%, bervorzugt 25 bis 100 Vol.-%, besonders bevorzugt 60 bis 100 Vol.-%, jeweils bezogen auf das Gesamtvolumen des polaren Extraktionsmittel eines oder mehrerer polarer Lösungsmittel, wobei diese protische organische oder anorganische Lösungsmittel sowie diese enthaltende Gemische sind.

Beispiele für polare Lösungsmittel sind Wasser, Ammoniak oder organische Lösungsmittel. Beispiele für organische Lösungsmittel sind Alkohole wie Methanol, Ethanol, 1-Propanol, 2-Propanol, 1-Butanol, 2-Butanol, Isobutanol, tert-Butanol, 1-Pentanol, 2-Pentanol, 3-Pentanol, Amylalkohol, Isoamylalkohol, 1-Hexanol, 2-Hexanol, 3-Hexanol, 2-Methyl-2-pentanol, 2-Methyl-3-pentanol, 3-Methyl-3-pentanol, 1-Heptanol, 2-Heptanol, 3-Heptanol, 4-Heptanol, 2-Methyl-2-hexanol, 3-Methyl-3-hexanol, 4-Methyl-4-hexanol, 2-Methyl-4-hexanol, 4-Methyl-2-hexanol, 2-Ethylhexanol, Benzylalkohol, Phenol, Resorcin, 1-Phenylethanol, 2-Phenylethanol, 1-Phenyl-2-butanol, 3-Phenyl-1-butanol, 1,2-Propandiol, 1,3-Propandiol, 1,2-Butandiol, 1,3-Butandiol, 1,4-Butandiol, Ethylenglykol oder Glycerin, Amine wie Ethanolamin, Propanolamin, Methylamin, Dimethylamin, Trimethylamin, Ethylamin, Diethylamin, Triethylamin, Methylethylamin, Methylbutylamin, Propylamin, Dipropylamin, Tripropylamin, Diisopropylamin, Triisopropylamin, tert-Butylamin, 1,2-Ethylendiamin, N,N,N',N'-Tetramethyl-1,2-ethylendiamin, Di(n-butyl)amin, Tributylamin, Anilin, N-Methylanilin, N,N-Dimethylanilin, Toluidin oder N,N-Dimethyltoluidin, Aldehyde wie Acetaldehyd, Butyraldehyd, Hexanal oder Propionaldehyd, Ketone wie Butanon, Aceton, Methylpropylketon oder Diethylketon, Carbonsäuren wie Ameisensäure, Essigsäure, Propionsäure, Buttersäure, Isobuttersäure, Pentansäure oder Hexansäure, Carbonsäureester wie Methylformiat, Ethylformiat, Propylformiat, Butylformiat, Essigsäuremethylester, Essigsäureethylester, Essigsäurepropylester, Essigsäurebutylester, Propionsäuremethylester oder Propionsäurebutylester, Ether wie Dimethylether, Diethylether, Methylethylether, Dibutylether, Diisopropylether, Dioxan, Trioxan, Tetrahydrofuran oder Dimethoxyethan, Heteroaromaten wie Furan, Pyrrol, Pyridin oder Thiophen, Carbonsäureamide wie Formamid, Dimethylformamid, Diethylformamid, Dimethylacetamid, Diethylacetamid oder N-Methylpyrrolidon, Nitrile wie Acetonitril, Propionitril oder Butyronitril, Halogenaromaten wie Chlorbenzol, 1,2-Dichlorbenzol, 1,3-Dichlorbenzol oder Brombenzol, Alkylhalogenide wie Ethylbromid, Ethylchlorid, Ethylfluorid, Butylbromid, Butylchlorid, Methylchlorid oder Dichlormethan und Nitroverbindungen wie Nitromethan, Nitroethan, 1-Nitropropan, 2-Nitropropan, 1-Nitrobutan, 2-Nitrobutan, Nitrobenzol, 2-Nitrotoluol oder 3-Nitrotoluol.

Beispiele für unpolare Lösungsmittel sind Alkane wie Propan, Butan, Isobutan, Pentan, 2-Methylbutan, Neopentan, Cyclopentan, Hexan, 2-Methylpentan, 3-Methylpentan, Heptan, 2-Methylhexan, 3-Methylhexan, Cyclohexan, Octan, Isooctan, Nonan, Isononan oder Decan und aromatische Kohlenwasserstoffe wie Benzol, Toluol oder Xylol.

Bevorzugte polare Extraktionsmittel sind Methanol, Ethanol, 2-Butanol, Isobutanol,
Methanol/Wasser, Ethanol/Wasser, 2-Butanol/Wasser, Isobutanol/Wasser, Pentan/Methanol, Pentan/ Ethanol, Hexan/2-Butanol, Heptan/Isobutanol oder Heptan/Toluol/lsobutanol. Dabei beträgt der Volumenanteil an polaren Lösungsmitteln zusammen 5 bis 100 %, bevorzugt 25 bis 100 %, besonders bevorzugt 60 bis 100 %. Besonders bevorzugte polare Extraktionsmittel sind Ethanol, Isobutanol,
Heptan/Isobutanol, Heptan/Toluol/Isobutanol.

Bei dem erfindungsgemäßen Verfahren können ein oder mehrere anorganische Nebenprodukte (z.B. anorganische Salze oder kovalente Metallhalogenide) in dem polaren Extraktionsmittel in Lösung gehen. Das gewünschte Metallocen bleibt als Feststoff zurück und kann beispielsweise durch Filtration, Zentrifugieren oder Dekantieren isoliert werden. Auf diese Weise gelingt es, unter Einsatz relativ kleiner Extraktionsmittelmengen in kurzer Zeit die unerwünschten anorganischen Nebenprodukte schonend vom gewünschten Metallocen abzutrennen.

Bei dem erfindungsgemäßen Verfahren können auch ein oder mehrere organometallische Nebenprodukte (z.B. unerwünschte Isomere des gewünschten Metallocens) in dem polaren Extraktionsmittel in Lösung gehen (gegebenenfalls unter Zersetzung). Das gewünschte Metallocen bleibt als Feststoff zurück und kann beispielsweise durch Filtration, Zentrifugieren oder Dekantieren isoliert werden. Auf diese Weise gelingt es, unter Einsatz relativ kleiner Extraktionsmittelmengen in kurzer Zeit die unerwünschten organometallischen Nebenprodukte schonend vom gewünschten Metallocen abzutrennen.

Das erfindungsgemäße Verfahren zeichnet sich durch hohe Raum-Zeit-Ausbeute aus. Außerdem lassen sich durch das erfindungsgemäße Verfahren die Abtrennzeiten (z.B. Filtrationszeiten) stark reduzieren, so daß auch große Metallocenmengen einfach, schnell und kostengünstig angereichert beziehungsweise gereinigt werden können. Das erfindungsgemäße Verfahren eignet sich insbesondere zur Isomerentrennung von Metallocenen, z.B. bei der Reinigung chiraler Metallocene zur Abtrennung der meso-Form von der racemischen Form.

Das erfindungsgemäße Verfahren kann beispielsweise so durchgeführt werden, daß das bei der Metallocen-Synthese anfallende Rohprodukt, enthaltend mindestens ein Metallocen und mindestens ein organometallisches und/oder anorganisches Nebenprodukt, bei Temperaturen zwischen -50 und +150°C, bevorzugt zwischen -50 und + 100°C, besonders bevorzugt zwischen -10 und +60°C, ganz besonders bevorzugt zwischen 0 und +40°C in einem polaren Extraktionsmittel suspendiert und kräftig durchmischt wird.
Alternativ kann auch eine bei der Metallocen-Synthese anfallende Rohproduktsuspension, enthaltend mindestens ein Metallocen und mindestens ein anorganisches Nebenprodukt, bei Temperaturen zwischen -50 und + 150°C, bevorzugt zwischen -50 und + 100°C, besonders bevorzugt zwischen -10 und +60°C, ganz besonders bevorzugt zwischen 0 und +40°C direkt mit einem polaren Extraktionsmittel versetzt werden. Das polare Extraktionsmittel besteht aus mindestens einem polaren Lösungsmittel oder aus einer Mischung verschiedener polarer Lösungsmittel oder aus einer Mischung eines oder mehrerer polarer Lösungsmittel und eines oder mehrerer unpolarer Lösungsmittel. Das Rohprodukt kann direkt mit dem polaren Extraktionsmittel behandelt werden. Falls eine Mischung polarer und gegebenenfalls unpolarer Lösungsmittel verwendet werden soll, können die einzelnen Lösungsmittel auch nacheinander mit dem Rohprodukt in Kontakt gebracht werden, beispielsweise zuerst die unpolaren, dann die polaren Lösungsmittel oder umgekehrt. Während der Kontaktzeit mit dem polaren Extraktionsmittel, die zwischen 1 Minute und 3 Tagen, bevorzugt 5 Minuten und 24 Stunden, besonders bevorzugt 10 Minuten und 6 Stunden betragen kann, gehen die organometallischen und/oder anorganischen Nebenprodukte in Lösung. Anschließend wird der zurückbleibende Feststoff von der Lösung getrennt, z.B. durch Filtration, Zentrifugation, Dekantieren. Dabei werden die organometallischen Nebenprodukte (z.B. Isomere des gewünschten Metallocens, Ligandreste, Ligandbruchstücke oder oligomere Nebenprodukte) und/oder anorganischen Nebenprodukte abgetrennt. Das als Feststoff erhaltene Produkt enthält das gewünschte Metallocen in angereicherter bzw. gereinigter Form, bevorzugt im Überschuß. Das erfindungsgemäße Verfahren führt im allgemeinen zu einer. Abreichung der anorganischen Nebenprodukte in der mit dem polaren Extraktionsmittel behandelten Mischung auf unter 5 Gew.-%, bezogen auf die Gesamtmenge des in fester Form erhaltenen Produkts. Es können auch Abreicherungsgrade von unter 0,1 Gew.-% anorganischer Nebenprodukte erzielt werden, insbesondere durch ein oder mehrfaches Wiederholen der Behandlung der Mischung mit einem polaren Extraktionsmittel.

Das erfindungsgemäße Verfahren führt im allgemeinen zu einer Abreicherung der organometallischen Nebenprodukte in der mit dem polaren Extraktionsmittel behandelten Mischung auf unter 10 Gew.-%, bezogen auf die Gesamtmenge des in fester Form erhaltenen Produkts. Es können auch Abreicherungsgrade von unter 0,5 Gew.-% organometallischer Nebenprodukte erzielt werden, insbesondere durch ein- oder mehrfaches Wiederholen der Behandlung der Mischung mit einem polaren Extraktionsmittel.

Die folgenden Beispiele dienen der Illustration der Erfindung haben jedoch keinen limitierenden Charakters. Das rac/meso-Verhältnis wurde durch ¹H-NMR-Spektroskopie (Signale bei 2,8 ppm) bestimmt.

### Beispiel 1:

Eine Suspension, enthaltend 5,0 g Dimethylsilandiylbis(2-methylindenyl)-zirkonium-dichlorid (rac/meso-Mischung im Verhältnis 1/1) und 20 ml Isobutanol, wird 30 min bei 25 °C gerührt und anschließend über eine G3-Fritte filtriert. Der Rückstand wird mit 10 ml Heptan gewaschen und im Vakuum vom Lösungsmittel befreit. Die Ausbeute an Dimethylsilandiylbis(2-methylindenyl)-zirkoniumdichlorid beträgt 1,9 g (38%) (rac/meso-Verhältnis = 11/1).

### Beispiel 2:

Eine Suspension, enthaltend 2,5 g Dimethylsilandiylbis(2-methylindenyl)zirkoniumdichlorid und 1,9 g Lithiumchlorid wird in 50 ml Heptan und 35 ml Isobutanol 30 Minuten bei 0°C gerührt und anschließend über eine G3-Fritte filtriert. Der Rückstand wird im Vakuum vom Lösungsmittel befreit. Die Ausbeute an Dimethylsilandiylbis(2-methylindenyl)zirkoniumdichlorid beträgt 2,4 g (Lithiumchloridgehalt: 2,2 %).

### Beispiel 3:

Eine Suspension, enthaltend 35 g Dimethylsilandiylbis(2-methylindenyl)-zirkoniumdichlorid und 23,3 g Lithiumchlorid wird in 350 ml Heptan und 375 ml Isobutanol 30 Minuten bei 0°C gerührt und anschließend über eine G3-Fritte filtriert. Der Rückstand wird im Vakuum vom Lösungsmittel befreit. Die Ausbeute an Dimethylsilandiylbis(2-methylindenyl)zirkoniumdichlorid beträgt 25,4 g (Lithiumchloridgehalt: 0,8 %).

## Patentansprüche

1. Verfahren zur Abreicherung von organometallischen und/oder anorganischen Nebenprodukten in Produktgemischen, die bei der Metallocensynthese anfallen, wobei eine Mischung, enthaltend eines oder mehrere Metallocene und eines oder mehrere organometallische und/oder anorganische Nebenprodukte, mit einem polaren Extraktionsmittel behandelt wird, **dadurch gekennzeichnet, daß** 5 bis 100 Vol.-% des polaren Extraktionsmittels, bezogen auf das Gesamtvolumen des polaren Extraktionsmittels, protische Lösungsmittel sind oder protische Lösungsmittel enthalten.

2. Verfahren gemäß Anspruch 1, worin die Mischung das bei der Metallocensynthese anfallende Rohprodukt ist.

3. Verfahren gemäß einem oder mehreren der Ansprüche 1 bis 2, worin die anorganischen Nebenprodukte auf weniger als 5 Gew.-%, bezogen auf die Gesamtmenge des in dem Verfahren erhaltenen Produkts, abgereichert werden.

4. Verfahren gemäß einem oder mehreren der Ansprüche 1 bis 3 worin die anorganischen Nebenprodukte anorganische Salze und/oder kovalente Metallhalogenide sind.

5. Verfahren gemäß einem oder mehreren der Ansprüche 1 bis 2, worin die organometallischen Nebenprodukte auf weniger als 10 Gew.-%, bezogen auf die Gesamtmenge des in dem Verfahren erhaltenen Produkts, abgereichert werden.

6. Verfahren gemäß einem oder mehreren der Ansprüche 1, 2 und 6, worin die Mischung die racemische Form und die meso-Form eines Metallocens enthält.

7. Verwendung eines polaren Extraktionsmittels gemäß Anspruch 1 zur Abreicherung von organometallischen und/oder anorganischen. Nebenprodukten in Produktgemischen, die bei der Metallocensynthese anfallen.

## Claims

1. A process for reducing the concentration of organometallic and/or inorganic by-products in product mixtures formed in the synthesis of metallocenes, which comprises treating a mixture comprising one or more metallocenes and one or more organometallic and/or inorganic by-products with a polar extractant, wherein from 5 to 100% by volume of the polar extractant, based on the total amount of the polar extractant, are protic solvents or contain protic solvents.

2. The process as claimed in claim 1, wherein the mixture is the crude product formed in the metallocene synthesis.

3. The process as claimed in one or both of claims 1 and 2, wherein the concentration of the inorganic by-products is reduced to less than 5% by weight, based on the total amount of the product obtained in the process.

4. The process as claimed in one or more of claims 1 to 3, wherein the inorganic by-products are inorganic salts and/or covalent metal halides.

5. The process as claimed in one or both of claims 1 and 2, wherein the concentration of the organometallic by-products is reduced to less than 10% by weight, based on the total amount of the product obtained in the process.

6. The process as claimed in one or more of claims 1, 2 and 5, wherein the mixture comprises the racemic form and the meso form of a metallocene.

7. Use of a polar extractant as claimed in claim 1 for reducing the concentration of organometallic and/or inorganic by-products in product mixtures formed in the synthesis of metallocenes.

## Revendications

1. Procédé pour diminuer la quantité de produits secondaires organo-métalliques et/ou inorganiques dans des mélanges de produits, qui se forment lors de la synthèse de métallocènes, dans lequel un mélange, contenant un ou plusieurs métallocènes et un ou plusieurs produits secondaires organo-métalliques et/ou inorganiques, est traité avec un agent d'extraction polaire, **caractérisé par le fait que** 5 à 100 % en volume de l'agent d'extraction polaire, par rapport au volume total de l'agent d'extraction polaire, sont des solvants protiques ou contiennent des solvants protiques.

2. Procédé selon la revendication 1, dans lequel le mélange est le produit brut se formant lors de la synthèse de métallocènes.

3. Procédé selon l'une ou plusieurs des revendication 1 à 2, dans lequel la quantité des produits secondaires inorganiques est abaissée à moins de 5 % en poids, par rapport à la quantité totale du produit obtenu dans le procédé.

4. Procédé selon l'une ou plusieurs des revendication 1 à 3, dans lequel les produits secondaires inorganiques sont des sels inorganiques et/ou des halogénures métalliques covalents.

5. Procédé selon l'une ou plusieurs des revendication 1 à 2, dans lequel la quantité des produits secondaires organo-métalliques est abaissée à moins de 10 % en poids, par rapport à la quantité totale du produit obtenu dans le procédé.

6. Procédé selon l'une ou plusieurs des revendication 1, 2 et 5, dans lequel le mélange comprend la forme racémique et la forme méso d'un métallocène.

7. Utilisation d'un agent d'extraction polaire selon la revendication 1 pour diminuer la quantité de produits secondaires organo-métalliques et/ou inorganiques dans des mélanges de produits, qui se forment lors de la synthèse de métallocènes.
